# EUROPEAN PATENT SPECIFICATION

(11) **EP 3 352 389 B1**
(45) Date of publication and mention of the grant of the patent: **28.02.2024**
(21) Application number: 17173378.5
(22) Date of filing: 30.05.2017
(51) Int. Cl.: H04B 1/14, H04B 10/2575, H04B 10/58, H04B 1/18

(54) **SYSTEM AND METHOD FOR PROCESSING AN ELECTROMAGNETIC SIGNAL**
SYSTEM UND VERFAHREN ZUR VERARBEITUNG EINES ELEKTROMAGNETISCHEN SIGNALS
SYSTÈME ET PROCÉDÉ DE TRAITEMENT DE SIGNAL ÉLECTROMAGNÉTIQUE

(30) Priority: 19.01.2017 EP 17152195
(43) Date of publication of application: 25.07.2018
(73) Proprietor: Rohde & Schwarz GmbH & Co. KG, 81671 München (DE)
(72) Inventor: Nowak, Thomas, 84564 Oberbergkirchen (DE); Volle, Christian, 85540 Haar (DE)
(74) Representative: Novagraaf Group

(56) References cited:
- EP-A1- 1 981 175
- EP-A2- 1 195 927
- WO-A1-98/16054
- WO-A2-2011/113097
- CN-A- 104 270 197
- US-A1- 2005 026 564
- US-A1- 2010 114 243
- US-A1- 2013 216 231
- US-A1- 2013 230 328

## Description

The invention relates to a system for processing an electromagnetic signal as well as a method for processing an electromagnetic signal.

A system for processing an electromagnetic signal can be used for transmitting an electromagnetic signal and/or for receiving an electromagnetic signal. The electromagnetic signal may be transmitted and/or received via an antenna system. In a system that is used for receiving an electromagnetic signal, the antenna system receives electromagnetic waves that are converted into an electrical signal for further processing, in particular an electric current. The electrical signal is transmitted via a transmission path to a radio receiver for analyzing purposes.

Due to structural restrictions at the installation site of the system, customers using such a system may have to bridge a long distance between the antenna system and the radio receiver, for instance 10 to 100 meters or even more. Accordingly, a transmission path has to be used that ensures high information security, high interference immunity and very good performance, simultaneously. This means that persons being not authorized shall not have any access to the information transmitted via the transmission path (high information security). Further, no electromagnetic radiation shall be emitted from or irradiated into the transmission path (high interference immunity), in particular parasitic electromagnetic interferences. In addition, a wide dynamic range, a low noise factor and a high linearity shall be ensured by the system (very good performance). In general, the very good performance corresponds to very good radio frequency data processed by the system.

In the state of the art, several systems are known for processing an electromagnetic signal even though a long distance has to be bridged between the antenna system and the radio receiver. For instance, systems are known that use a coaxial transmission line for transmitting radio frequency signals received via the antenna system as this ensures that broadband signals can be transmitted while a high linearity is achieved. However, coaxial transmission lines have a high attenuation that is frequency dependent.

Further, systems are known that transmit the information digitally, for instance via a local area network transmission line (LAN connection), as the signals can be transmitted over long distances in a lossless manner. However, the information security is low as an existing network has to be used wherein unauthorized persons may break into that network. In addition, a local area network connection can only be used for connecting the radio receiver with a control and/or analyzing unit. Thus, the radio receiver has to be installed close to the antenna system.

It is also known in the prior art to use fiber optic cables for transmitting radio frequency signals received via the antenna system. This is called radio frequency over fiber (RFoF). Thus, the electric signals obtained by the antenna system have to be converted into an optical signal that is transmitted to the radio receiver wherein the optical signal is reconverted into an electrical signal prior to the radio receiver. The optical transmission path ensures low attenuation (loss) and high information security. However, an optical transmission path has a limited dynamic range, a high noise factor as well as a high non-linearity resulting in unwanted harmonics.

In US 2010/0114243 A1 a system is described that comprises a wireless telemetry module used in an implementable medical device and an external device also having a telemetry module interacting with the wireless telemetry module of the implementable medical device. The telemetry module comprises an interference rejection module being formed by an integrated circuit.

EP 1 981 175 A1 shows a communication system over a power line distribution network having power lines as transmission paths.

US 2013/0216231 A1 describes an optical communication system comprising a transmission apparatus and a reception apparatus.

EP 1 195 927 A2 shows a system for optical heterodyne detection of an optical signal including optical preselection.

In US 2013/0230328 A1 a system for carrier-embedded optical radio-over-fiber communications using carrier embedded optical radio-signal modulation is described.

US 6,016,426 A shows a cellular system for wide band digital signal processing at a central office that is connected to one or more cellular sites by optical fiber cables.

In CN 104 270 197 A, a system is shown, which comprises a first site, a second site and an optical cable that connects both sites, wherein the optical cable is used for a bidirectional communication between both sites. At the first site a filter bank is provided.

Accordingly, there is a need for a system for processing an electromagnetic signal having optimized characteristics with regard to performance, dynamic range, linearity and cost-efficiency.

The invention provides a system for processing an electromagnetic signal, wherein the system comprises a transmission path with limited dynamic range, a pre-selection unit that is positioned upstream the transmission path, an antenna system that is connected to the pre-selection unit and a broadband radio receiver that is positioned downstream the transmission path. The pre-selection unit is configured to pre-select signal portions and to control the level of the output electromagnetic signal and wherein a mixing unit is positioned between the pre-selection unit and the transmission path. The transmission path is an optical transmission path. The pre-selection unit has a level control that is formed as an automatic gain control such that the output level of the electromagnetic signal forwarded to the transmission path is maintained constant irrespective of the level of the electromagnetic signal received. The broadband radio receiver is connected to the pre-selection unit via a feedback line such that the broadband radio receiver is configured to obtain information about the state of the pre-selection unit and how the pre-selection unit influences the received electromagnetic signal with regard to the pre-selecting parameters and the level control.

Further, the invention provides a method for processing an electromagnetic signal, in particular by using a system as described above, with the following steps:
- Receiving an electromagnetic signal via an antenna system,
- Pre-selecting the electromagnetic signal by using a pre-selection unit,
- Mixing the electromagnetic signal received to an intermediate frequency by using a mixing unit
- Transmitting the mixed electromagnetic signal via a transmission path with limited dynamic range, wherein the transmission path is an optical transmission path, and
- Receiving the electromagnetic signal via a radio receiver that is connected to the pre-selection unit via the transmission path.

The pre-selection unit has a level control that is formed as an automatic gain control such that the output level of the electromagnetic signal forwarded to the transmission path is maintained constant irrespective of the level of the electromagnetic signal received. The radio receiver is connected to the pre-selection unit via a feedback line such that the radio receiver is configured to obtain information about the state of the pre-selection unit and how the pre-selection unit influences the received electromagnetic signal with regard to the pre-selecting parameters and the level control.

The invention is based on the finding that the transmission path having limited dynamic range can be used to its maximum by positioning the pre-selection unit upstream the transmission path such that interfering influences caused by non-linearity are reduced, in particular filtered, prior to the transmission via the transmission path. Hence, unwanted harmonics or harmonic distortion signals can be suppressed or eliminated by using the pre-selection unit. Further, the pre-selection unit has a level control ensuring that the dynamic range can be shifted appropriately prior to forwarding the electromagnetic signal to the transmission path such that the electromagnetic signal is transmitted via the transmission path in an optimal manner as no compression occurs. Accordingly, the electromagnetic signal can be controlled with regard to the output level and filtered during the pre-selecting step. The additional mixing unit ensures that the signal to be transmitted can be mixed down to a certain intermediate frequency such that it is not required to transmit a high frequency electromagnetic signal received via the transmission path. The selectivity of the system is increased appropriately. The occurrence of harmonic signals in the system becomes irrelevant due to the mixing stage. Thus, the mixing stage assists the pre-selection unit that also suppresses or eliminates unwanted harmonics and harmonic distortion signals, respectively. Therefore, disturbances at a receiver site of the system can be prevented effectively while the output electromagnetic signal being controlled appropriately wherein the electromagnetic signal transmitted via the transmission path is received at the receiver site. Moreover, the mixing unit may already limit the bandwidth of the signal to be transmitted such that only a portion of the whole spectrum is transmitted via the transmission path. The portion of the spectrum transmitted can be selected by setting the mixing unit.

According to the invention, the level control of the pre-selection unit is formed as an automatic gain control. Hence, the output level of the electromagnetic signal forwarded to the transmission path is maintained constant irrespective of the level of the electromagnetic signal received. Further, the dynamic range may be automatically shifted with respect to the level of the electromagnetic signal.

The electromagnetic signals received are electromagnetic waves that are converted by the antenna system into an electrical signal, in particular electric currents, forwarded to the pre-selection unit. The pre-selection unit is directly connected to the antenna system such that signal portions of the electromagnetic signal received, in particular the appropriately converted electrical signal, are initially pre-selected by the pre-selection unit such that interfering influences caused by non-linearity are reduced at the beginning. Hence, harmonic distortions are suppressed by the pre-selection unit.

Since the transmission path is an optical transmission path, low attenuation and high interference immunity are ensured. As the electromagnetic signal transmitted via the optical transmission path is pre-processed in the pre-selection unit, the low dynamic range of the optical transmission path is used to the maximum. Thus, the low dynamic range is only a significantly reduced drawback. The optical transmission path may comprise an optical fiber that is used for bridging long distances.

Moreover, the mixing unit may comprise at least one mixer and at least one local oscillator. For instance, the mixing unit is established by a narrowband converter with an adjustable (tunable) local oscillator in order to mix the electromagnetic signal to the intermediate frequency desired. Alternatively, the mixing unit is established by a block converter and at least one fixed local oscillator such that the electromagnetic signal is mixed to a defined frequency range. Moreover, the mixing unit may comprise several local oscillators, in particular several fixed local oscillators.

According to another aspect, the mixing unit is a multi-stage mixing unit. Thus, several mixing stages are provided in order to mix the electromagnetic signal to the frequency intended. Therefore, the mixing unit comprises several mixers each mixing the electromagnetic signal in an appropriate manner.

According to a certain embodiment, an optical transmitter is provided that is positioned downstream the pre-selection unit. The optical transmitter is part of the optical transmission path, in particular the beginning of the optical transmission path. Therefore, the optical transmitter can be deemed as a first interface between the electrical signal and the optical signal. The electric signal being pre-processed by the pre-selection unit is converted into an optical signal that is transmitted via the optical transmission path ensuring low losses and high interference immunity. The optical transmitter is connected with the optical fiber wherein the optical transmitter transmits the optical signal into that optical fiber.

An optical receiver may be provided that is positioned downstream the optical transmitter. The optical receiver corresponds to the end of the optical transmission path as it (re-)converts the optical signal into an electrical signal. Thus, the optical transmitter is the second interface of the optical transmission path. The electrical signal can be processed further by other components of the system being connected to the optical transmitter, for instance a radio receiver. The optical receiver is connected with the optical fiber wherein the optical receiver receives the optical signal from the optical fiber.

Generally, the electromagnetic signal may be an optical signal, an electrical signal and/or electromagnetic waves. Usually, the signal is converted several times since the antenna system receives electromagnetic waves that are converted into an electrical signal, in particular electric currents. The electrical signal is then converted into an optical signal which is later reconverted into an electrical signal. All these signals comprise the same information and/or data as the original electromagnetic waves received by the antenna system. However the different types of signals, in particular electromagnetic waves, electrical signal and optical signal, fall under the generic term electromagnetic signal.

The mixing unit may be positioned between the pre-selection unit and the optical transmitter. Therefore, the electromagnetic signal received is pre-selected initially and mixed afterwards. The mixing takes place before the electromagnetic signal, in particular the electrical signal, is converted into an optical signal for transmission purposes. Accordingly, it is not required to use a sophisticated optical transmitter being expensive as the electrical signal to be transmitted is pre-selected and mixed prior to its conversion.

According to an aspect, the broadband radio receiver is positioned downstream the optical receiver. The pre-selection unit is not directly connected to the broadband radio receiver since the transmission path is located between the pre-selection unit and the broadband radio receiver. Thus, the pre-selection unit is not part of the broadband radio receiver as it is separately formed with respect to the broadband radio receiver. Only pre-selected electromagnetic signals without any disturbing signal portions are forwarded to the broadband radio receiver that have been transmitted via the transmission path with limited dynamic range. As the transmission path is positioned between the pre-selection unit and the broadband radio receiver, the pre-selection unit and the broadband radio receiver may have a long distance between each other.

According to the invention, the broadband radio receiver is connected to the mixing unit via the feedback line. Therefore, the broadband radio receiver is configured to obtain information about the state of the pre-selection unit and, optionally, the mixing unit. This means that the broadband radio receiver that is located downstream the transmission path is permanently informed about the interaction of the pre-selection unit located upstream the transmission path as well as the mixing unit that is also located upstream the transmission path. According to the invention, the broadband radio receiver receives information about how the pre-selection unit influences the received electromagnetic signal with regard to the pre-selecting parameters and the level control. This ensures that a misinterpretation of the electromagnetic signal received by the antenna system is avoided. For instance, the radio receiver is informed about an attenuation element that is switched on in the pre-selecting unit. As the broadband radio receiver receives this information, the broadband radio receiver is able to determine the correct level of the electromagnetic signal received. In addition, the broadband radio receiver also receives information about the mixing unit that may influence the electromagnetic signal transmitted such that any misinterpretation can be avoided effectively. The broadband radio receiver receives continuously information from the pre-selection unit and/or the mixing unit via the feedback line without any dead time.

Particularly, the broadband radio receiver is configured to control the pre-selection unit and/or the mixing unit. Thus, the radio receiver is also able to directly interact with the pre-selection unit in order to specify the parameters to be used by the pre-selection unit for pre-processing the electromagnetic signals received. For instance, the broadband radio receiver can adjust filters and/or attenuation elements of the pre-selection unit. The feedback line is configured to be a control and feedback line. Moreover, the broadband radio receiver can directly interact with the mixing unit in order to set the local oscillator, in particular the frequency. For instance, the frequency of the tunable local oscillator is set appropriately. Alternatively, local oscillators and/or mixers of the multi-stage mixing unit are switched on and off respectively.

The system may comprise a first device that comprises the pre-selection unit, the mixing unit and/or the optical transmitter. Further, the system may comprise a second device that comprises the optical receiver and/or the broadband radio receiver. Both devices may be connected with each other via the optical fiber of the transmission path such that the optical fiber connects two separately formed devices over a long distance. The components of each device may be at least partly housed in a common housing, respectively. For instance, the antenna system of the first device, if any, is only partly housed. The first device may also comprise the antenna system.

According to a certain embodiment, at least one of the pre-selection unit and the mixing unit is configured to be self-controlled and/or controlled by an external component being connected to the pre-selection unit and/or the mixing unit. Thus, the pre-selection unit can automatically determine the parameters to be used during the pre-selection process. Alternatively or supplementary, an external component can be used to control the pre-selection unit, in particular wherein the external component may be controlled by a user of the system. The same applies for the mixing unit that can automatically determine the parameters, for instance the intermediate frequency. However, this control can also be done by an external component connected to the mixing unit.

In general, at least one of the pre-selection unit and the mixing unit can be controlled and/or regulated by its own, the broadband radio receiver and/or an external component connected to the pre-selection unit. The control and/or regulation may be performed partly by these different modules.

Moreover, a control and analyzing unit may be provided, in particular wherein the control and analyzing unit is connected to the broadband radio receiver. Thus, the data or information obtained from the electromagnetic signal processed in the broadband radio receiver is forwarded to the control and analyzing unit for analyzing and control purposes. The control and analyzing unit may have an operational component that can be used by the customer of the system in order to make certain settings with regard to the system.

For instance, the mixing unit comprises at least one filter, in particular a bandpass filter. Accordingly, the electromagnetic signal to be transmitted, in particular the electric one, can be narrowed with regard to the bandwidth. Therefore, the transmission path can be established in a more cost-efficient manner while using components being specified for narrowband transmission purposes. In addition, harmonics can be avoided due to the filtering.

Particularly, the pre-selection unit comprises at least one sub-octave filter. The sub-octave filter is a bandpass filter used for pre-selecting the signal portions of the electromagnetic signal received. Generally, the sub-octave filter is tunable and switchable in order to reduce the number of unwanted input signal (portions). Accordingly, harmonic distortion signals can be prevented effectively in the radio receiver that is connected to the pre-selection unit via the transmission path. Particularly, a filter bank may be provided that comprises several sub-octave bandpass filters.

According to an aspect, the electromagnetic signal is converted into an optical signal by using an optical transmitter prior to the transmitting step and/or reconverted into an electrical signal by using an optical receiver after the transmitting step. Thus, the optical transmitter and the optical receiver correspond to interfaces between the electrical signals and the optical ones. Moreover, both optical units are parts of the transmission path, in particular wherein the optical transmitter and the optical receiver correspond to the beginning of the transmission path and its end, respectively.

Moreover, at least one of the pre-selection unit and the mixing unit may be self-controlled, controlled by the radio receiver and/or controlled by a third component that is connected to the pre-selection unit and/or the mixing unit. Accordingly, different components can be used for controlling the pre-selection unit and/or the mixing unit. These different parts may be used solely for controlling purposes or in a combined manner such that different parameters are controlled by different parts of the system.

The invention will now be described with reference to a preferred embodiment that is shown in the enclosed drawings. In the drawings,
- Figure 1 schematically shows a system for processing an electromagnetic signal according to the invention, and
- Figure 2 shows a flow-chart representing a method for processing an electromagnetic signal according to the invention.

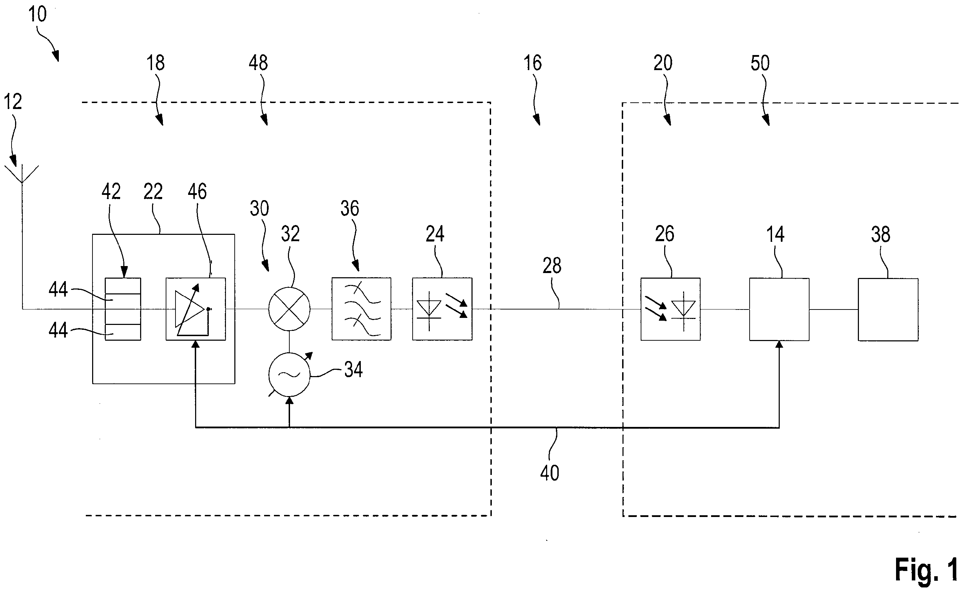

In Figure 1, a system 10 for processing an electromagnetic signal is shown that comprises an antenna system 12 and a broadband radio receiver 14 that are connected with each other via a transmission path 16 with limited dynamic range (limited dynamics). In the shown embodiment, the transmission path 16 is established by an optical transmission path.

The antenna system 12 is located at an antenna site 18 whereas the broadband radio receiver 14 is located at a receiver site 20. Both sites 18, 20 may be distant from each other by a long distance, for instance 10 - 100 meters or even more. Accordingly, a long distance has to be bridged by the transmission path 16 wherein high information security, high interference immunity and very good performance have to be ensured while electromagnetic signals are transmitted via the transmission path 16.

The system 10 comprises a pre-selection unit 22 that is directly connected to the antenna system 12 such that an electromagnetic signal received via the antenna system 12 is pre-processed by the pre-selection unit 22.

In addition, the pre-selection unit 22 is connected to the transmission path 16 wherein the transmission path 16 comprises an optical transmitter 24 corresponding to the beginning of the (optical) transmission path 16 as the optical transmitter 24 converts the electromagnetic signal received, in particular an electrical signal, into an optical signal.

The end of the (optical) transmission path 16 is formed by an optical receiver 26 that is directly connected to the broadband radio receiver 14.

As already mentioned, the optical transmission path 16 comprises the optical transmitter 24 and the optical receiver 26 that correspond to the beginning and the end of the optical transmission path 16, respectively. In addition, an optical fiber 28 is provided that interconnects the optical transmitter 24 and the optical receiver 26. This optical fiber 28 is used to bridge the long distance that is provided between the antenna site 18 and the receiver site 20.

Generally, the optical transmission path 16, in particular the optical fiber 28, ensures low attenuations (losses) and high electromagnetic interference immunity while processing the electromagnetic signal.

In addition, the system 10 has a mixing unit 30 that is located between the pre-selection unit 22 and the optical transmitter 24. In the shown embodiment, the mixing unit 30 comprises a mixer 32, for instance a narrowband mixer, and a tunable local oscillator 34 such that the frequency of the electric current forwarded to the optical transmitter 24 can be mixed to an intermediate frequency to be set via the mixing unit 30.

In general, the mixing unit 30 can be a multi-stage mixing unit comprising several local oscillators and/or mixers.

Further, the mixing unit 30 comprises a filter 36 for limiting the bandwidth of the signal processed wherein the filter 36 is positioned between the mixer 32 and the optical transmitter 24. The filter 36 may be a bandpass filter such that the mixed electric current is filtered prior to its conversion with regard to the bandwidth. Thus, the whole spectrum is limited to a certain portion due to the filter 36 applied to the signal mixed.

As shown in Figure 1, the mixing unit 30 is directly connected to the pre-selection unit 22 and the optical transmitter 24. In other words, the mixing unit 30 is interconnected between the pre-selection unit 22 and the optical transmitter 24 such that the pre-selection unit 22 and the optical transmitter 24 are located upstream and downstream the mixing unit 30, respectively.

The pre-selection unit 22 is directly connected to the antenna system 12 and the mixing unit 30.

Moreover, the system 10 comprises a control and analyzing unit 38 that is directly connected to the broadband radio receiver 14 such that the data obtained by the radio receiver 14 is forwarded to the control and analyzing unit 38. The control and analyzing unit 38 may also have an operational function such that a customer of the system 10 may make settings with regard to the system 10 via the control and analyzing unit 38.

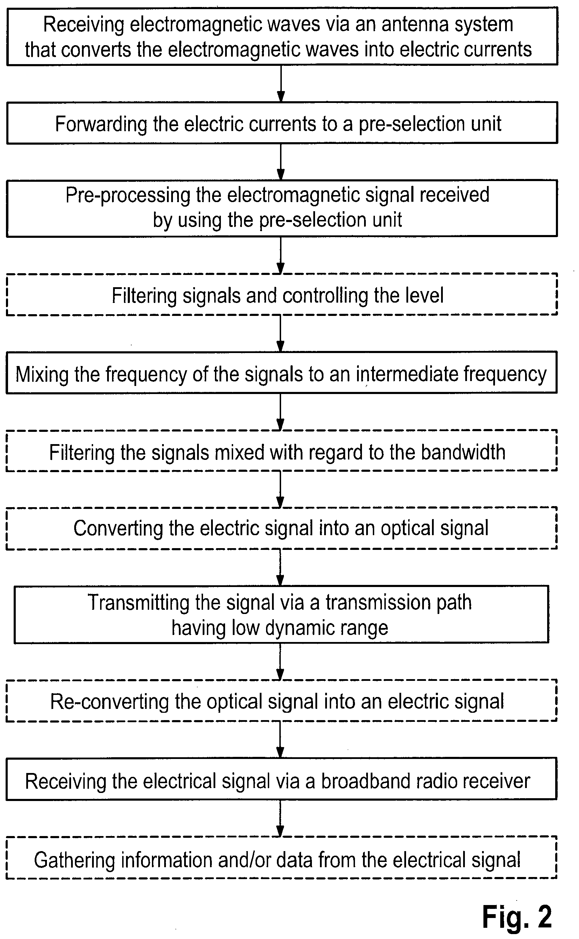

The broadband radio receiver 14 is also connected with the pre-selection unit 22 via a control and feedback line 40 in a bidirectional manner such that data can be exchanged between the broadband radio receiver 14 and the pre-selection unit 22 as will be described later with regard to the functionality of the system 10 and the method illustrated in the flow-chart of Figure 2. In the same manner, the broadband radio receiver 14 is connected to the mixing unit 30 via the control and feedback line 40 as will be described later.

In the shown embodiment, the pre-selection unit 22 has a filter bank 42 comprising several sub-octave (bandpass) filters 44 as well as a level control 46. The filter bank 42 is used to reduce the number of unwanted input signals and, thus, generation of harmonic signals is prevented appropriately.

The level control 46 is formed as an automatic gain control such that the level of the electromagnetic signal output at the pre-selection unit 22 and forwarded to the transmission path 16 is maintained constant irrespective of the level of the electromagnetic signal received via the antenna system 12.

In addition, the dynamic range can be shifted automatically with respect to the level of the electromagnetic signal received. Thus, the usable dynamic range is optimized.

The system 10 shown in Figure 1 can be used for performing the method illustrated by the flow-chart of Figure 2.

According to the flow-chart, the system 10 receives an electromagnetic signal, in particular electromagnetic waves, via the antenna system 12. The electromagnetic waves may correspond to a radio frequency signal.

The antenna system 12 converts the electromagnetic waves into an electrical signal, for instance an electric current. Then, the electrical signal, in particular the electric current, is forwarded to the pre-selection unit 22 for pre-processing purposes.

The filter bank 42 of the pre-selection unit 22, in particular its several sub-octave filters 44, reduces the number of unwanted incoming signals or the number of unwanted portions of the electromagnetic signal received. Thus, it is prevented that unwanted harmonics are generated. Accordingly, the electromagnetic signals received via the antenna system 12 are pre-selected by the pre-selection unit 22 ensuring that only wanted signal (portions) are forwarded for further processing.

In addition, the level of the electromagnetic signals is controlled via the level control 46 of the pre-selection unit 22. As already mentioned, the level control 46 may be an automatic gain control such that the level of the output signal is substantially maintained constant irrespective of the level of the electromagnetic signal received by the antenna system 12.

Then, the pre-selected electromagnetic signal is forwarded to the mixing unit 30 wherein the frequency of the electrical signal is mixed to an intermediate frequency while using the mixer 32 and the tunable local oscillator 34 that can be adjusted appropriately by the broadband radio receiver 14 via the control and feedback line 40.

The electrical signal mixed to the intermediate frequency is filtered afterwards with regard to the bandwidth while applying the filter 36.

Generally, the mixing and filtering ensures that the bandwidth of the electromagnetic signal received by the antenna system 12 can be limited such that the transmission path 16 may be established more cost-efficient as it is not necessary to transmit the broadband signal received. In other words, only the portion(s) of interest of the whole spectrum of the electromagnetic signal received by the antenna system 12 is/are transmitted while applying the mixing unit 30. Therefore, the mixing unit 30 assists the pre-selection unit 22 while suppressing or eliminating unwanted harmonics and harmonic distortion signals respectively.

The electrical signal mixed to the intermediate frequency and filtered with regard to its bandwidth is then forwarded to the optical transmitter 24 that converts the electrical signal into an optical signal such that the optical signal can be forwarded via the optical fiber 28 over the long distance. Accordingly, the optical fiber 28 may have a length of several meters, for instance 10 - 100 meters or even more.

The optical receiver 26 corresponding to the end of the optical transmission path 16 reconverts the optical signal into an electrical signal for further processing. The electrical signal forwarded is then received by the broadband radio receiver 14 in order to gather information and/or data submitted by the electromagnetic signal received.

This information or data obtained in the broadband radio receiver 14 is provided to the control and analyzing unit 38 for analyzing purposes.

The broadband radio receiver 14 is permanently connected to the pre-selection unit 22 and the mixing unit 30 via the control and feedback line 40. Thus, the radio receiver 14 receives information about the state of the pre-selection unit 22, for instance the parameters used by the pre-selection unit 22 during the pre-selection process, as well as the parameters of the mixing unit 30, for instance the intermediate frequency set, continuously without any dead time. The broadband radio receiver 14 may be informed about the status of the filter bank 42, in particular the status of the tunable and switchable sub-octave filters 44, and the status of the level control 46. Moreover, the broadband radio receiver 14 receives information regarding the status of the mixer 32 and the local oscillator 34, for instance the intermediate frequency used for mixing purposes. Accordingly, the broadband radio receiver 14 is enabled to determine the correct parameters of the electromagnetic signal received and processed by the system 10.

For instance, the broadband radio receiver 14 is informed about any attenuation performed by the pre-selection unit 22, in particular the level control 46. Hence, the broadband radio receiver 14 uses this information for determining the correct level (original power) of the electromagnetic signal received via the antenna system 12 without the attenuation that has been done by the pre-selection unit 22.

Further, the broadband radio receiver 14 is informed about the mixing properties applied to the signal received such that the broadband radio receiver 14 can use this information for determining the correct frequency of the electromagnetic signal received via the antenna system 12.

In addition, the broadband radio receiver 14 is informed about the status of the filter 36. For instance, the filter 36 can be a tunable one such that the bandwidth of the signal transmitted can be set appropriately.

For instance, the filter 36 may comprise several (different) filter components such that the bandwidth can be adapted by switching the filter components of the filter 36. The switching may also be controlled by the broadband radio receiver 14.

Additionally, the broadband radio receiver 14 is able to control the pre-selection unit 22 as well as the mixing unit 30 at least partly which means that the broadband radio receiver 14 specifies the parameters used by the pre-selection unit 22 for pre-processing the electromagnetic signals and the intermediate frequency applied respectively.

Further, the pre-selection unit 22 and/or the mixing unit 30 may be configured to be self-controlled. Alternatively or supplementary, at least one of the pre-selection unit 22 and the mixing unit 30 can be controlled by an external component that is connected to the pre-selection unit 22 and/or the mixing unit 39. This external component can be manually controlled by the user of the system 10.

The controlling and regulation of the pre-selection unit 22 and/or the mixing unit 30 can be performed solely by the pre-selection unit 22 and the mixing unit 30 respectively (self-controlled), the broadband radio receiver 14 or the external component. Alternatively or supplementary, these modules can control and regulate at least one of the pre-selection unit 22 and the mixing unit 30 in parts simultaneously, for instance certain parameters are controlled by the broadband radio receiver 14 whereas other parameters are controlled by the pre-selection unit 22 and/or the mixing unit 30 in a self-controlled manner and the external component.

Moreover, the antenna system 12, the pre-selection unit 22, the mixing unit 30 and/or the optical transmitter 24 may be part of a first device 48 whereas the optical receiver 26, the broadband radio receiver 14 and/or the control and analyzing unit 38 are part of a second device 50. Both devices 48, 50 are separately formed and connected with each other via the optical fiber 28. For instance, the pre-selection unit 22, the mixing unit 30 and the optical transmitter 24 may be housed in a common housing of the first device 48. In addition, the optical receiver 26, the broadband radio receiver 14 and/or the control and analyzing unit 38 may be housed in another common housing corresponding to the second device 50. Accordingly, these devices 48, 50 each can be adapted such that they may be used with an already existing system.

Alternatively, the mixing unit 30 may comprise several local oscillators and/or mixers such that a multi-stage mixing unit is provided. Then, each local oscillator may have a fixed frequency wherein the broadband radio receiver 14 controls the mixing unit 30 such that the different local oscillators and/or mixers are switched on and off respectively in order to set the intermediate frequency appropriately.

In general, the system 10 ensures high information security, high interference immunity and good performance even though long distances have to be bridged between the antenna system 12 and the broadband radio receiver 14.

The high security and high interference immunity are ensured by using the optical transmission path, in particular the optical fiber 28. The normally occurring drawbacks while using an optical transmission path such as low dynamic range, high noise factor and high non-linearity are compensated since the pre-selection unit 22 is located upstream the optical transmission path 16. The pre-selection unit 22 ensures that the dynamic range of the transmission path 16 is used at the maximum. Accordingly, the electromagnetic signals received are pre-processed by the pre-selection unit 22 such that the optical transmission path 16 is used in an optimal manner. Disturbing influences of the non-linearity are minimized by using the filter bank 42, for instance. Thus, harmonic disturbances are suppressed. Further, the dynamic range is shifted to its optimum by the level control 46 of the pre-selection unit 22. Thus, compression of the electromagnetic signal is avoided.

## Claims

1. A system (10) for processing an electromagnetic signal, wherein the system (10) comprises a transmission path (16) with limited dynamic range, a pre-selection unit (22) that is positioned upstream the transmission path (16), an antenna system (12) that is connected to the pre-selection unit (22) and a broadband radio receiver (14) that is positioned downstream the transmission path (16), wherein the pre-selection unit (22) is configured to pre-select signal portions and to control the level of the output electromagnetic signal and wherein a mixing unit (30) is positioned between the pre-selection unit (22) and the transmission path (16), wherein the transmission path (16) is an optical transmission path, **characterized in that** the pre-selection unit (22) has a level control (46) that is formed as an automatic gain control such that the output level of the electromagnetic signal forwarded to the transmission path (16) is maintained constant irrespective of the level of the electromagnetic signal received, wherein the broadband radio receiver (14) is connected to the pre-selection unit (22) via a feedback line (40) such that the broadband radio receiver (14) is configured to obtain information about the state of the pre-selection unit (22) and how the pre-selection unit (22) influences the received electromagnetic signal with regard to the pre-selecting parameters and the level control.

2. The system (10) according to claim 1, **characterized in that** the mixing unit (30) comprises at least one mixer (32) and at least one local oscillator (34).

3. The system (10) according to claim 1 or 2, **characterized in that** the mixing unit (30) is a multi-stage mixing unit.

4. The system (10) according to any of the preceding claims, **characterized in that** an optical transmitter (24) is provided that is positioned downstream the pre-selection unit (22).

5. The system (10) according to claim 1, **characterized in that** the mixing unit (30) is positioned between the pre-selection unit (22) and the optical transmitter (24).

6. The system (10) according to any of the preceding claims, **characterized in that** an optical receiver (26) is provided that is positioned downstream the optical transmitter (24), wherein the broadband radio receiver (14) is positioned downstream the optical receiver (26).

7. The system (10) according to any of the preceding claims, **characterized in that** the broadband radio receiver (14) is connected to the mixing unit via the feedback line (40).

8. The system (10) according to any of the preceding claims, **characterized in that** the broadband radio receiver (14) is configured to control the pre-selection unit (22) and/or the mixing unit (30).

9. The system (10) according to any of the claims 4 to 8, **characterized in that** a first device (48) is provided which comprises the pre-selection unit (22), the mixing unit (30) and/or the optical transmitter (24) and/or that a second device (50) is provided which comprises the optical receiver (26) and/or the broadband radio receiver (14).

10. The system (10) according to any of the preceding claims, **characterized in that** at least one of the pre-selection unit (22) and the mixing unit (30) is configured to be self-controlled and/or controlled by an external component being connected to the pre-selection unit (22) and/or the mixing unit (30).

11. The system (10) according to any of the preceding claims, **characterized in that** the mixing unit (30) comprises at least one filter (36), in particular a bandpass filter.

12. The system (10) according to any of the preceding claims, **characterized in that** the pre-selection unit (22) comprises at least one sub-octave filter (44).

13. A method for processing an electromagnetic signal, in particular by using a system (10) according to any of the preceding claims, with the following steps:
a) Receiving an electromagnetic signal via an antenna system (12),
b) Pre-selecting the electromagnetic signal by using a pre-selection unit (22),
c) Mixing the electromagnetic signal received to an intermediate frequency by using a mixing unit (30),
d) Transmitting the mixed electromagnetic signal via a transmission path (16) with limited dynamic range, wherein the transmission path (16) is an optical transmission path, and
e) Receiving the electromagnetic signal via a broadband radio receiver (14) that is connected to the pre-selection unit (22) via the transmission path (16) **characterized in that** the pre-selection unit (22) has a level control (46) that is formed as an automatic gain control such that the output level of the electromagnetic signal forwarded to the transmission path (16) is maintained constant irrespective of the level of the electromagnetic signal received, wherein the broadband radio receiver (14) is connected to the pre-selection unit (22) via a feedback line (40) such that the broadband radio receiver (14) is configured to obtain information about the state of the pre-selection unit (22) and how the pre-selection unit (22) influences the received electromagnetic signal with regard to the pre-selecting parameters and the level control.

14. The method according to claim 13, **characterized in that** the electromagnetic signal is converted into an optical signal by using an optical transmitter (24) prior to the transmitting step and/or reconverted into an electrical signal by using an optical receiver (26) after the transmitting step.

15. The method according to claim 13 or 14, **characterized in that** at least one of the pre-selection unit (22) and the mixing unit (30) is self-controlled, controlled by the broadband radio receiver (14) and/or controlled by a third component that is connected to the pre-selection unit (22) and/or the mixing unit (30).

## Patentansprüche

1. System (10) zum Verarbeiten eines elektromagnetischen Signals, wobei das System (10) einen Übertragungsweg (16) mit begrenztem Dynamikbereich, eine Vorauswahleinheit (22), die stromaufwärts des Übertragungswegs (16) positioniert ist, ein Antennensystem (12), das mit der Vorauswahleinheit (22) verbunden ist, und einen Breitbandfunkempfänger (14) umfasst, der stromabwärts des Übertragungswegs (16) positioniert ist, wobei die Vorauswahleinheit (22) konfiguriert ist, um Signalabschnitte vorab auszuwählen und den Pegel des elektromagnetischen Ausgangssignals zu steuern, wobei eine Mischeinheit (30) zwischen der Vorauswahleinheit (22) und dem Übertragungsweg (16) positioniert ist, wobei der Übertragungsweg (16) ein optischer Übertragungsweg ist,
**dadurch gekennzeichnet, dass** die Vorauswahleinheit (22) eine Pegelsteuerung (46) aufweist, die als eine automatische Verstärkungssteuerung derart ausgebildet ist, dass der Ausgangspegel des an den Übertragungsweg (16) weitergeleiteten elektromagnetischen Signals unabhängig von dem Pegel des empfangenen elektromagnetischen Signals konstant gehalten wird, wobei der Breitbandfunkempfänger (14) mit der Vorauswahleinheit (22) über eine Rückkopplungsleitung (40) derart verbunden ist, dass der Breitbandfunkempfänger (14) konfiguriert ist, um Informationen über den Zustand der Vorauswahleinheit (22) und wie die Vorauswahleinheit (22) das empfangene elektromagnetische Signal in Bezug auf die Vorauswahlparameter und die Pegelsteuerung beeinflusst, zu erhalten.

2. System (10) nach Anspruch 1, **dadurch gekennzeichnet, dass** die Mischeinheit (30) mindestens einen Mischer (32) und mindestens einen lokalen Oszillator (34) umfasst.

3. System (10) nach Anspruch 1 oder 2, **dadurch gekennzeichnet, dass** die Mischeinheit (30) eine mehrstufige Mischeinheit ist.

4. System (10) nach einem der vorstehenden Ansprüche,
**dadurch gekennzeichnet, dass** ein optischer Sender (24) bereitgestellt ist, der stromabwärts der Vorauswahleinheit (22) positioniert ist.

5. System (10) nach Anspruch 1, **dadurch gekennzeichnet, dass** die Mischeinheit (30) zwischen der Vorauswahleinheit (22) und dem optischen Sender (24) positioniert ist.

6. System (10) nach einem der vorstehenden Ansprüche,
**dadurch gekennzeichnet, dass** ein optischer Empfänger (26) bereitgestellt ist, der stromabwärts des optischen Senders (24) positioniert ist, wobei der Breitbandfunkempfänger (14) stromabwärts des optischen Empfängers (26) positioniert ist.

7. System (10) nach einem der vorstehenden Ansprüche,
**dadurch gekennzeichnet, dass** der Breitbandfunkempfänger (14) über die Rückkopplungsleitung (40) mit der Mischeinheit verbunden ist.

8. System (10) nach einem der vorstehenden Ansprüche,
**dadurch gekennzeichnet, dass** der Breitbandfunkempfänger (14) konfiguriert ist, um die Vorauswahleinheit (22) und/oder die Mischeinheit (30) zu steuern.

9. System (10) nach einem der Ansprüche 4 bis 8,
**dadurch gekennzeichnet, dass** eine erste Vorrichtung (48) bereitgestellt ist, die die Vorauswahleinheit (22), die Mischeinheit (30) und/oder den optischen Sender (24) umfasst und/oder dass eine zweite Vorrichtung (50) bereitgestellt ist, die den optischen Empfänger (26) und/oder den Breitbandfunkempfänger (14) umfasst.

10. System (10) nach einem der vorstehenden Ansprüche,
**dadurch gekennzeichnet, dass** mindestens eine der Vorauswahleinheit (22) und der Mischeinheit (30) konfiguriert ist, um selbstgesteuert und/oder durch eine externe Komponente gesteuert zu werden, die mit der Vorauswahleinheit (22) und/oder der Mischeinheit (30) verbunden ist.

11. System (10) nach einem der vorstehenden Ansprüche,
**dadurch gekennzeichnet, dass** die Mischeinheit (30) mindestens einen Filter (36) umfasst, insbesondere einen Bandpassfilter.

12. System (10) nach einem der vorstehenden Ansprüche,
**dadurch gekennzeichnet, dass** die Vorauswahleinheit (22) mindestens einen Suboktavenfilter (44) umfasst.

13. Verfahren zum Verarbeiten eines elektromagnetischen Signals, insbesondere durch Verwenden eines Systems (10) nach einem der vorstehenden Ansprüche, mit den folgenden Schritten:
a) Empfangen eines elektromagnetischen Signals über ein Antennensystem (12),
b) Vorauswählen des elektromagnetischen Signals durch Verwenden einer Vorauswahleinheit (22),
c) Mischen des elektromagnetischen Signals, das auf eine Zwischenfrequenz empfangen wird, durch Verwenden einer Mischeinheit (30),
d) Übertragen des gemischten elektromagnetischen Signals über einen Übertragungsweg (16) mit einem begrenzten Dynamikbereich, wobei der Übertragungsweg (16) ein optischer Übertragungsweg ist, und
e) Empfangen des elektromagnetischen Signals über einen Breitbandfunkempfänger (14), der mit der Vorauswahleinheit (22) über den Übertragungsweg (16) verbunden ist, **dadurch gekennzeichnet, dass** die Vorauswahleinheit (22) eine Pegelsteuerung (46) aufweist, die als eine automatische Verstärkungssteuerung derart ausgebildet ist, dass der Ausgangspegel des an den Übertragungsweg (16) weitergeleiteten elektromagnetischen Signals unabhängig von dem Pegel des empfangenen elektromagnetischen Signals konstant gehalten wird, wobei der Breitbandfunkempfänger (14) mit der Vorauswahleinheit (22) über eine Rückkopplungsleitung (40) derart verbunden ist, dass der Breitbandfunkempfänger (14) konfiguriert ist, um Informationen über den Zustand der Vorauswahleinheit (22) und wie die Vorauswahleinheit (22) das empfangene elektromagnetische Signal in Bezug auf die Vorauswahlparameter und die Pegelsteuerung beeinflusst, zu erhalten.

14. Verfahren nach Anspruch 13, **dadurch gekennzeichnet, dass** das elektromagnetische Signal durch Verwenden eines optischen Senders (24) vor dem Sendeschritt in ein optisches Signal umgewandelt und/oder durch Verwenden eines optischen Empfängers (26) nach dem Sendeschritt in ein elektrisches Signal umgewandelt wird.

15. Verfahren nach Anspruch 13 oder 14, **dadurch gekennzeichnet, dass** mindestens eine der Vorauswahleinheit (22) und der Mischeinheit (30) selbstgesteuert, durch den Breitbandfunkempfänger (14) gesteuert und/oder durch eine dritte Komponente gesteuert wird, die mit der Vorauswahleinheit (22) und/oder der Mischeinheit (30) verbunden ist.

## Revendications

1. Système (10) pour le traitement d'un signal électromagnétique, dans lequel le système (10) comprend un trajet de transmission (16) avec une plage dynamique limitée, une unité de présélection (22) qui est positionnée en amont du trajet de transmission (16), un système d'antenne (12) qui est connecté à l'unité de présélection (22) et un récepteur radio à large bande (14) qui est positionné en aval du trajet de transmission (16), dans lequel l'unité de présélection (22) est configurée pour présélectionner des parties de signal et pour commander le niveau du signal électromagnétique de sortie et dans lequel une unité de mélange (30) est positionnée entre l'unité de présélection (22) et le trajet de transmission (16), dans lequel le trajet de transmission (16) est un trajet de transmission optique, **caractérisé en ce que** l'unité de présélection (22) a une commande de niveau (46) qui est formée comme une commande de gain automatique de telle sorte que le niveau de sortie du signal électromagnétique transféré au trajet de transmission (16) est maintenu constant indépendamment du niveau du signal électromagnétique reçu, dans lequel le récepteur radio à large bande (14) est connecté à l'unité de présélection (22) par l'intermédiaire d'une ligne de rétroaction (40) de telle sorte que le récepteur radio à large bande (14) est configuré pour obtenir des informations concernant l'état de l'unité de présélection (22) et comment l'unité de présélection (22) influence le signal électromagnétique reçu en ce qui concerne les paramètres de présélection et la commande de niveau.

2. Système (10) selon la revendication 1, **caractérisé en ce que** l'unité de mélange (30) comprend au moins un mélangeur (32) et au moins un oscillateur local (34).

3. Système (10) selon la revendication 1 ou 2, **caractérisé en ce que** l'unité de mélange (30) est une unité de mélange à étages multiples.

4. Système (10) selon l'une quelconque des revendications précédentes, **caractérisé en ce qu'**un émetteur optique (24) est prévu qui est positionné en aval de l'unité de présélection (22).

5. Système (10) selon la revendication 1, **caractérisé en ce que** l'unité de mélange (30) est positionnée entre l'unité de présélection (22) et l'émetteur optique (24).

6. Système (10) selon l'une quelconque des revendications précédentes, **caractérisé en ce qu'**un récepteur optique (26) est prévu qui est positionné en aval de l'émetteur optique (24), dans lequel le récepteur radio à large bande (14) est positionné en aval du récepteur optique (26).

7. Système (10) selon l'une quelconque des revendications précédentes, **caractérisé en ce que** le récepteur radio à large bande (14) est connecté à l'unité de mélange par l'intermédiaire de la ligne de rétroaction (40).

8. Système (10) selon l'une quelconque des revendications précédentes, **caractérisé en ce que** le récepteur radio à large bande (14) est configuré pour commander l'unité de présélection (22) et/ou l'unité de mélange (30).

9. Système (10) selon l'une quelconque des revendications 4 à 8, **caractérisé en ce qu'**un premier dispositif (48) est prévu qui comprend l'unité de présélection (22), l'unité de mélange (30) et/ou l'émetteur optique (24) et/ou qu'un second dispositif (50) est prévu qui comprend le récepteur optique (26) et/ou le récepteur radio à large bande (14).

10. Système (10) selon l'une quelconque des revendications précédentes, **caractérisé en ce qu'**au moins l'une parmi l'unité de présélection (22) et l'unité de mélange (30) est configurée pour être autocommandée et/ou commandée par un composant externe étant connecté à l'unité de présélection (22) et/ou à l'unité de mélange (30).

11. Système (10) selon l'une quelconque des revendications précédentes, **caractérisé en ce que** l'unité de mélange (30) comprend au moins un filtre (36), en particulier un filtre passe-bande.

12. Système (10) selon l'une quelconque des revendications précédentes, **caractérisé en ce que** l'unité de présélection (22) comprend au moins un filtre sous-octave (44).

13. Procédé de traitement d'un signal électromagnétique, en particulier à l'aide d'un système (10) selon l'une quelconque des revendications précédentes, avec les étapes suivantes :
a) réception d'un signal électromagnétique par l'intermédiaire d'un système d'antenne (12),
b) pré-sélection du signal électromagnétique à l'aide d'une unité de présélection (22),
c) mélange du signal électromagnétique reçu à une fréquence intermédiaire à l'aide d'une unité de mélange (30),
d) émission du signal électromagnétique mélangé par l'intermédiaire d'un trajet de transmission (16) avec une plage dynamique limitée, dans lequel le trajet de transmission (16) est un trajet de transmission optique, et
e) réception du signal électromagnétique par l'intermédiaire d'un récepteur radio à large bande (14) qui est connecté à l'unité de présélection (22) par l'intermédiaire du trajet de transmission (16) **caractérisé en ce que** l'unité de présélection (22) a une commande de niveau (46) qui est formée comme une commande de gain automatique de telle sorte que le niveau de sortie du signal électromagnétique transféré au trajet de transmission (16) est maintenu constant indépendamment du niveau du signal électromagnétique reçu, dans lequel le récepteur radio à large bande (14) est connecté à l'unité de présélection (22) par l'intermédiaire d'une ligne de rétroaction (40) de telle sorte que le récepteur radio à large bande (14) est configuré pour obtenir des informations concernant l'état de l'unité de présélection (22) et comment l'unité de présélection (22) influence le signal électromagnétique reçu en ce qui concerne les paramètres de présélection et la commande de niveau.

14. Procédé selon la revendication 13, **caractérisé en ce que** le signal électromagnétique est converti en un signal optique à l'aide d'un émetteur optique (24) avant l'étape d'émission et/ou reconverti en un signal électrique à l'aide d'un récepteur optique (26) après l'étape d'émission.

15. Procédé selon la revendication 13 ou 14, **caractérisé en ce que** au moins l'une parmi l'unité de présélection (22) et l'unité de mélange (30) est autocommandée, commandée par le récepteur radio à large bande (14) et/ou commandée par un troisième composant qui est connecté à l'unité de présélection (22) et/ou à l'unité de mélange (30).
